# EUROPÄISCHE PATENTSCHRIFT

(11) **EP 3 022 115 B1**
(45) Veröffentlichungstag und Bekanntmachung des Hinweises auf die Patenterteilung: **13.12.2017**
(21) Anmeldenummer: 14744444.2
(22) Anmeldetag: 10.07.2014
(51) Int. Cl.: B64C 3/48

(54) **VERÄNDERBARES FLÜGELPROFIL**
MODIFIABLE WING PROFIL
PROFILE D'AILERON MODIFIABLE

(30) Priorität: 17.07.2013 DE 102013011915
(43) Veröffentlichungstag der Anmeldung: 25.05.2016
(73) Patentinhaber: Airbus Defence and Space GmbH, 85521 Ottobrunn (DE)
(72) Erfinder: HASLACH, Horst, 82538 Geretsried (DE)
(74) Vertreter: LKGLOBAL Lorenz & Kopf PartG mbB Patentanwälte
(86) Internationale Anmeldenummer: PCT/DE2014/000347
(87) Internationale Veröffentlichungsnummer: WO 2015/007258

(56) Entgegenhaltungen:
- EP-A2- 2 179 918
- DE-A1- 2 348 304
- US-A- 4 247 066

## Beschreibung

Die vorliegende Erfindung betrifft Änderungen von Flügelprofilen, und betrifft insbesondere eine Aerodynamikstruktur für eine Flügel- oder Rudereinrichtung eines Luftfahrzeugs, ein Luftfahrzeug, ein Verfahren zur Anpassung einer äußeren Kontur einer Aerodynamikstruktur für eine Flügel- oder Rudereinrichtung, und eine Verwendung einer Aerodynamikstruktur in einem Luftfahrzeug.

Bei Flügel- und Steuerflächen werden beispielsweise Ruder, bzw. Rudersegmente zum Steuern vorgesehen. Außerdem kommen auch zusätzliche Klappen zur Anpassung des Profils an aerodynamische Gegebenheiten zur Anwendung, beispielsweise während der Startphase, während des Reiseflugs oder auch während der Landephase. Sowohl die Verwendung von Ruderelementen, als auch die Verwendung von zusätzlichen Klappen dient dazu, das aerodynamisch wirksame Profil zu verändern, d.h. die jeweiligen Flügel- und Steuerflächen an unterschiedliche Situationen anpassen zu können. DE 103 17 258 B4 und EP 2 179 918 A2 beschreiben z.B. einen Verstellmechanismus für einen formvariablen Flügel. Es hat sich jedoch gezeigt, dass ein zusätzlicher Bedarf für weitere Konturänderungen des Flügelprofils besteht.

Eine Aufgabe der vorliegenden Erfindung besteht daher darin, eine Aerodynamikstruktur zur Verfügung zu stellen, die sich hinsichtlich des Flügelprofils vielfältig anpassen und verändern lässt.

Diese Aufgabe wird durch eine Aerodynamikstruktur für eine Flügel- oder Rudereinrichtung eines Luftfahrzeugs, ein Luftfahrzeug, ein Verfahren zur Anpassung einer äußeren Kontur einer Aerodynamikstruktur für eine Flügel- oder Rudereinrichtung und eine Verwendung einer Aerodynamikstruktur in einem Luftfahrzeug nach einem der unabhängigen Ansprüche erreicht. Beispielhafte Ausführungsformen sind in den abhängigen Ansprüchen dargestellt.

Gemäß der Erfindung ist eine Aerodynamikstruktur für einen Flügel- oder Rudereinrichtung eines Luftfahrzeugs nach Anspruch 1 vorgesehen. Die Aerodynamikstruktur weist eine Tragstruktur und eine Außenhaut auf. Die Tragstruktur weist in Längsrichtung eine adaptive Flächentragstruktur auf, die sich in Längsrichtung von einem Wurzelbereich zu einem äußeren Endbereich erstreckt und von einer tragenden Fläche gebildet ist, die eine in Querrichtung verlaufende anpassbare periodische Profilierung aufweist, bei der abwechselnd erste und zweite Flanschbereiche ausgebildet sind, die über in Richtung einer Profilhöhe verlaufende Stegbereiche verbunden sind. Dabei sind abwechselnd ausgerichtete und in Längsrichtung verlaufende offene Profilsegmente ausgebildet. Die Tragstruktur weist im Bereich der offenen Profilsegmente mehrere in Querrichtung verlaufende Verbindungssegmente auf, die zwei benachbarte erste oder zweite Flanschbereiche miteinander verbinden. Wenigstens ein Teil der Verbindungssegmente ist als in der Länge einstellbare Verbindungssegmente ausgebildet, so dass der Abstand der benachbarten ersten oder zweiten Flanschbereiche einstellbar ist. Die Außenhaut ist an der tragenden Fläche befestigt. Durch Einstellen des Abstands der benachbarten ersten oder zweiten Flanschbereiche ist eine äußere Kontur der Aerodynamikstruktur wenigstens in Querrichtung veränderbar.

Dadurch wird zum einen eine tragende Struktur für beispielsweise einen Flügel oder eine Rudereinrichtung vorgesehen, die jedoch zum anderen auch bereits in ihrer Kontur, bezogen auf die Querrichtung des Flügels, veränderbar ist. Mit anderen Worten, bereits die Tragstruktur selbst wird als veränderbar ausgebildet, um so eine möglichst vielfältige Anpassbarkeit der äußeren Kontur der aerodynamischen Struktur zur Verfügung zu stellen.

Aufgrund der Anpassbarkeit der äußeren Kontur lässt sich eine Reduzierung des aerodynamischen Widerstands beispielsweise bei Rudern oder auch bei Flügeln erzielen. Gleichzeitig kann die aerodynamische Leistung des Flügels oder des Ruders verbessert werden, beispielsweise weil Spalte, die bei zusätzlichen Klappen etc. zur Modifizierung der aerodynamisch wirksamen Kontur, aufgrund der Formänderung der tragenden Struktur nicht erforderlich sind. Zusätzlicher Vorteil der fehlenden Spalte ist eine Reduzierung des Lärms und eine Verringerung der elektromagnetischen Signatur (Radarsignatur) eines Luftfahrzeugs.

Die Begriffe "Querrichtung" und "Längsrichtung" beziehen sich auf eine quer zur Flugrichtung verlaufende Flügel- oder Rudereinrichtung. Die Längsrichtung eines in Befestigungsrichtung gesehen länglichen Flügels verläuft beispielsweise quer zur Flugrichtung. Die Querrichtung verläuft dann z.B. in Flugrichtung.

Bei schräg zur Flugrichtung angeordneten Flügel- oder Rudereinrichtungen verläuft die Querrichtung beispielsweise geneigt zur Längsachse des Flügels.

Bei einer an einem Ende an einer tragenden Struktur, z.B. einer Rumpfkonstruktion, befestigten Flügel- oder Rudereinrichtung kann die Längsrichtung auch als Befestigungsrichtung, Auskragrichtung oder Primärrichtung bezeichnet werden. Die Querrichtung verläuft dann quer zur Befestigungsrichtung und kann auch als Sekundärrichtung bezeichnet werden.

Im Falle eines Flügels ist der Wurzelbereich die Flügelwurzel und der äußere Endbereich ist das äußere Flügelende.

Der Begriff "periodische Profilierung" bezieht sich auf eine sich wiederholende Abfolge von Flanschen und Stegen sowie der abwechselnd ausgerichteten, offenen Profilsegmente. Die Profilierung kann sich dabei in ihren konkreten Maßen verändern, z.B. mit dem Grad der Profilierung zunehmen oder abnehmen. Die Profilierung kann z.B. eine zu- oder abnehmende Periodizität oder eine zu- oder abnehmende Amplitude aufweisen.

Die periodische Profilierung kann auch als wellenförmiges Profil bezeichnet werden, wobei unter Wellen auch Trapezstrukturen, bzw. trapezförmige Wellen, verstanden werden.

Die Stegbereiche verlaufen in Richtung der Profilhöhe und die Flanschbereiche verlaufen an den beiden äußeren Seiten der Profilierung, z.B. bei einem Flügel im oberen und unteren Bereiche der Profilierung.

Gemäß einem Beispiel sind die in der Länge einstellbaren Verbindungssegmente als Stellantriebe, Stellelemente, Lenkelemente oder Aktuatoren vorgesehen.

Die Tragstruktur wird durch die Flächentragstruktur und die Verbindungssegmente gebildet. Die Tragstruktur bildet damit eine stabile Innenstruktur der Aerodynamikstruktur, beispielsweise eines Flügels oder eines Ruders.

Mit "Aerodynamikstruktur" wird der Bestandteil einer Flügel- oder Rudereinrichtung bezeichnet, der im Betrieb des Luftfahrzeugs die aerodynamische Wirkung bezeichnet, z.B. bei einem Flügel einen Auftrieb oder auch Abtrieb erzeugt, oder bei einem Ruder ein Moment zum Herbeiführen einer Richtungsänderung erzeugt. Die Aerodynamikstruktur kann auch als Flügel- oder Ruderstruktur bezeichnet werden. Der Begriff "Aerodynamikstruktur" wird im Zusammenhang der vorliegenden Erfindung verwendet, um die einer Flügel- und einer Rudereinrichtung gemeinsamen Bestandteile zu bezeichnen. Flügel- und Rudereinrichtungen weisen z.B. eine äußere, dem Luftstrom ausgesetzte Fläche auf, die auch als Außenhaut bezeichnet wird. Diese Fläche führt z.B. aufgrund ihrer Kontur bzw. ihrer Form, d.h. aufgrund ihres dem Luftstrom ausgesetzten Querschnitts, die gewünschte aerodynamische Wirkung herbei. Flügel- und Rudereinrichtungen weisen außerdem eine tragende Struktur auf, um die dem Luftstrom ausgesetzte Fläche zu halten und die erzeugten Kräfte in die Struktur des Luftfahrzeugs einzuleiten.

Ein Teil der Verbindungssegmente ist beispielsweise als feststehende Verbindungselemente ausgebildet.

Bei dem Luftfahrzeug handelt es sich beispielsweise um ein Flugzeug; z.B. ist die Aerodynamikstruktur eine Tragfläche eines Tragwerks oder eine Leitfläche eines Leitwerks. Die "Tragfläche" wird auch als Flügeleinrichtung bezeichnet. In einem anderen Beispiel ist die Tragfläche ein (wesentlicher) Bestandteil der Flügeleinrichtung. Die "Leitfläche" wird auch als Rudereinrichtung bezeichnet. In einem anderen Beispiel ist die Leitfläche ein (wesentlicher) Bestandteil der Rudereinrichtung. Aufgrund der adaptiven Verbindungssegmente wird eine formvariable Aerodynamikstruktur zur Verfügung gestellt.

Die Flächentragstruktur bildet einen Längsträger. Die periodische Profilierung bildet zusammen mit den Verbindungssegmenten einen Querspant, bzw. mehrere, in Längsrichtung hintereinander vorgesehene Querspanten.

Gemäß einem Beispiel ist vorgesehen, dass die periodische Profilierung als eine trapezförmige Profilierung und/oder eine wellenförmige Profilierung ausgebildet ist.

Damit wird eine einfach herzustellende Flächentragstruktur zur Verfügung gestellt, die zum einen anpassbar ist und zum anderen eine ausreichende Stabilität zum Einleiten der Kräfte aufweist.

Die Profilierung kann auch trapezförmige und wellenförmige Segmente aufweisen. Bei einer wellenförmigen Profilierung bilden die Tal- bzw. Bergsegmente der Wellenstruktur die Flanschbereiche und die dazwischen befindlichen Bereiche der Wellenstruktur bilden die Stegbereiche.

Die Profilierung kann auch eine polygonal geformte periodische Profilierung aufweisen.

In einem Beispiel ist vorgesehen, dass ein nach oben oder unten offenes Segment mit einem Zwischensteg unterteilt ist und zwischen den seitlichen Wandungen, d.h. den Stegen und dem Zwischensteg feststehende Verbindungen oder einstellbare Lenkelemente vorgesehen sind.

In einem Beispiel ist vorgesehen, dass die Verbindungsbereiche zwischen den Stegbereichen und den Flanschbereichen eine Flexibilität aufweisen, um einen Winkel zwischen den Stegbereichen und den Flanschbereichen zu verändern. Die Veränderbarkeit des Winkels ist z.B. auf die mögliche Längenänderung des einstellbaren Verbindungssegments abgestimmt.

In einem Beispiel ist vorgesehen, dass die Stegbereiche in gewissem Umfang verformbar sind.

Gemäß einem Beispiel ist wenigstens ein offenes Profilsegment als Holm ausgebildet, der sich in Längsrichtung von einem Wurzelbereich zu einem äußeren Endbereich erstreckt.

Das Vorsehen eines Holms bietet eine zusätzliche Stabilität, so dass in den anderen Bereichen die Flächentragstruktur anderen Belastungen ausgesetzt ist und daher in diesen Bereichen mit weniger Material auskommt, was eine zusätzliche Gewichtsersparnis bedeutet. Der Holm ist in die Flächentragstruktur integriert ausgebildet.

Gemäß einem Beispiel ist die Flächentragstruktur derart in einem mittleren Bereich der Flächentragstruktur an den Holm angeschlossen, dass quer zur Längsrichtung des Holms auf beiden Seiten des Holm adaptive Bereiche der Flächentragstruktur ausgebildet sind, z.B. sind ein vorderer und ein hinterer adaptiver Bereich ausgebildet.

Gemäß einem Beispiel ist die Außenhaut dadurch verformbar, dass sie wenigstens teilweise mit Haltepunkten über Halteelemente an der Flächentragstruktur befestigt ist. Wenigstens ein Teil der Halteelemente ist als adaptive Halterungen ausgebildet, mit denen die Lage der Haltepunkte in Relation zu der Flächentragstruktur veränderbar ist.

Die Halteelemente werden auch als sekundäre Verbindungssegmente oder sekundäre Verbindungselemente bezeichnet, und die adaptiven Halterungen als sekundäre in der Länge einstellbare Verbindungselemente. Die Verbindungselemente der Flächentragstruktur können als primäre Verbindungselemente, d.h. beispielsweise primäre in der Länge feststehende Verbindungselemente und primäre in der Länge einstellbare Verbindungselemente bezeichnet werden.

Beispielsweise ist die Außenhaut an der Vorderkante und den seitlichen Flächen mit Halteelementen an den Flanschbereichen befestigt. An der Hinterkante kann die Außenhaut direkt an den Endbereichen der Flächentragstruktur befestigt sein.

Die Haltepunkte sind beispielsweise als Sekundärtragwerk ausgebildet, z.B. als Trägerrost mit längs zu der Profilierung der Flächentragstruktur verlaufenden Halteträgern. Die Flächentragstruktur bildet zusammen mit den Verbindungssegmenten das Primärtragwerk.

Gemäß einem Beispiel ist vorgesehen, dass die adaptiven Halterungen in der Länge einstellbare Halteglieder sind, mit denen der Abstand der Haltepunkte zu der Flächentragstruktur anpassbar ist.

In einem anderen Beispiel sind die adaptiven Halterungen alternativ oder zusätzlich als Schwenkarme ausgebildet, die in ihrem Schwenkgrad in Relation zu der Flächentragstruktur einstellbar sind.

Gemäß einem Beispiel ist die Außenhaut einteilig.

Beispielsweise ist die Außenhaut quer zur Fläche flexibel.

In einem anderen Beispiel ist die Außenhaut in Richtung der Fläche dehnbar ausgebildet.

Beispielsweise ist für die Außenhaut ein dehnbares Material bzw. ein dehnbarer Aufbau vorgesehen, z.B. mit elastischen Kunststoffen gefüllte Waben und Hybrid-Composite.

In einem Beispiel ist vorgesehen, dass die Profilveränderung so gesteuert wird, dass keine Längenänderung in der Fläche der Außenhaut auftritt.

Gemäß der Erfindung ist auch ein Luftfahrzeug vorgesehen, dass eine Rumpfkonstruktion, ein Tragwerk mit wenigstens einer Tragfläche und ein Leitwerk mit wenigstens einer Leitfläche aufweist. Das Tragwerk und das Leitwerk sind an der Rumpfkonstruktion gehalten. Wenigstens eine Tragfläche und/oder eine Leitfläche ist mit einer Aerodynamikstruktur nach einem der vorhergehenden Beispiele ausgebildet.

Das Tragwerk umfasst beispielsweise einen oder mehrere Flügel. Das Leitwerk umfasst beispielsweise ein Höhenleitwerk, ein Seitenleitwerk und/oder ein Querruder.

Außerdem sind Kombinationen daraus vorgesehen, z.B. Taileron, oder V-Leitwerk. Tailerons sind Höhenruder, die am Heck eines Flugzeugs vorgesehen sind, und bei denen durch eine unabhängige Ansteuerung der beiden Ruderhälften eigentliche Funktionen eines Querruders ergänzt oder sogar ganz ersetzt wird.

Gemäß der Erfindung ist auch ein Verfahren zur Anpassung einer äußeren Kontur einer Aerodynamikstruktur für eine Flügel- oder Rudereinrichtung vorgesehen. Das Verfahren weist die folgenden Schritte auf:
a) Bereitstellen einer Aerodynamikstruktur für eine Flügel- oder Rudereinrichtung eines Luftfahrzeugs. Die Aerodynamikstruktur weist eine Tragstruktur und eine Außenhaut auf, wobei die Tragstruktur in Längsrichtung eine adaptive Flächentragstruktur aufweist, die sich in Längsrichtung von einem Wurzelbereich zu einem äußeren Endbereich erstreckt und von einer tragenden Fläche gebildet ist, die eine in Querrichtung verlaufende anpassbare periodische Profilierung aufweist, bei der abwechselnd erste und zweite Flanschbereiche ausgebildet sind, die über in Richtung einer Profilhöhe verlaufende Stegbereiche verbunden sind, wobei abwechselnd ausgerichtete und in Längsrichtung verlaufende offene Profilsegmente ausgebildet sind. Die Tragstruktur weist im Bereich der offenen Profilsegmente mehrere in Querrichtung verlaufende Verbindungssegmente auf, die zwei benachbarte erste oder zweite Flanschbereiche miteinander verbinden. Wenigstens ein Teil der Verbindungssegmente ist als in der Länge einstellbare Verbindungssegmente ausgebildet. Die Außenhaut ist an der tragenden Fläche befestigt.
b) Einstellen der in der Länge einstellbaren Verbindungssegmente.
c) Verändern der äußeren Kontur der Aerodynamikstruktur wenigstens in Querrichtung.

Gemäß der Erfindung ist außerdem die Verwendung einer Aerodynamikstruktur nach einem der vorhergehenden Beispiele in einem Luftfahrzeug vorgesehen.

Gemäß einem Aspekt der Erfindung ist vorgesehen, dass eine Aerodynamikstruktur, wie beispielsweise ein Flügel, mit einer anpassbaren Tragstruktur ausgebildet ist. Die Anpassung der Tragstruktur erfolgt dadurch, dass bei einem in Querrichtung profilierten Tragelement, das als die innere tragende Struktur dient, in die Profilierung Stellglieder eingesetzt sind, mit denen sich die Profilierung verändern lässt. Dazu ist die Profilierung periodisch ausgebildet, um in den offenen Profilsegmenten den Abstand seitlicher Stegsegmente ändern zu können. Da die Außenhaut an der Profilierung befestigt ist, erfolgt durch Veränderung der inneren tragenden Struktur auch eine Veränderung der äußeren Kontur. Zusätzlich kann die Aerodynamikstruktur durch Längenänderung der Stellglieder zwischen der Tragstruktur und der Außenhaut verändert werden.

Es sei darauf hingewiesen, dass die Merkmale der Ausführungsbeispiele und Aspekte der Vorrichtungen auch für Ausführungsformen des Verfahrens sowie Verwendung der Vorrichtung gelten und umgekehrt. Außerdem können auch diejenigen Merkmale frei miteinander kombiniert werden, bei denen dies nicht explizit erwähnt ist, wobei sich synergetische Effekte ergeben können, die über die Addition der verschiedenen Merkmale hinaus gehen.

Nachfolgend wird anhand der beigefügten Zeichnungen näher auf Ausführungsbeispiele der Erfindung eingegangen. Es zeigen:
- **Fig. 1**: einen schematischen Querschnitt durch ein Beispiel einer Aerodynamikstruktur in einer ersten Konturform in Fig. 1A, in einer zweiten Konturform in Fig. 1B und in einer dritten Konturform in Fig. 1C;
- **Fig. 2**: ein weiteres Beispiel einer Aerodynamikstruktur im Querschnitt;
- **Fig. 3**: eine Frontansicht eines Luftfahrzeugs; und
- **Fig. 4**: ein Beispiel eines Verfahrens zur Anpassung einer äußeren Kontur einer Aerodynamikstruktur.

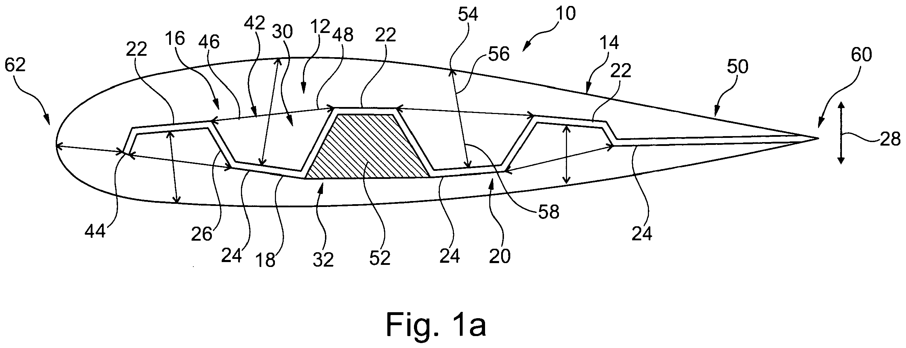

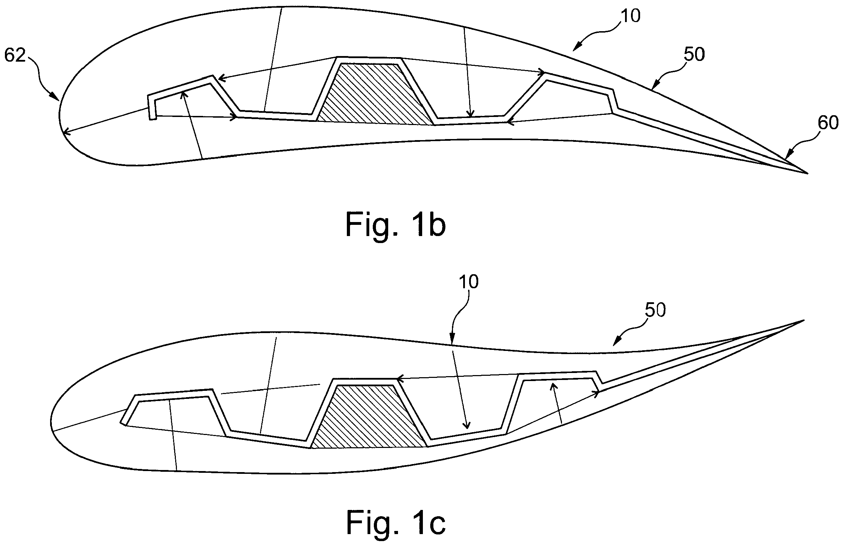

Fig. 1 zeigt eine Aerodynamikstruktur 10 für eine Flügel- oder Rudereinrichtung eines Luftfahrzeugs. Die Aerodynamikstruktur 10 weist eine Tragstruktur 12 und eine Außenhaut 14 auf. Die Aerodynamikstruktur ist, wie bereits erwähnt, in Fig. 1A in einem Querschnitt gezeigt und erstreckt sich in einer Längsrichtung, wobei die Längsrichtung senkrecht zum Blatt angeordnet ist. Die Tragstruktur 12 weist in Längsrichtung eine adaptive Flächentragstruktur 16 auf, die sich in Längsrichtung von einem Wurzelbereich zu einem äußeren Endbereich erstreckt und von einer tragenden Fläche 18 gebildet ist. Die tragende Fläche 18 weist eine in Querrichtung verlaufende anpassbare periodische Profilierung 20 auf, bei der abwechselnd erste Flanschbereiche 22 und zweite Flanschbereiche 24 ausgebildet sind. Die ersten und zweiten Flanschbereiche 22, 24 sind über Stegbereiche 26 verbunden, die in Richtung einer Profilhöhe 28 verlaufen. Dabei sind abwechselnd ausgerichtete und in Längsrichtung verlaufende offene Profilsegmente 30 ausgebildet. Die ersten Flanschbereiche 22 sind, bezogen auf die Darstellung in Fig. 1A, beispielsweise oben angeordnet, und die zweiten Flanschbereiche 24 unten. Die Stegbereiche 26 verlaufen zwischen den oberen und unteren Bereichen in Richtung der Profilhöhe 28, bzw. leicht schräg geneigt dazu. Die periodische Profilierung 20 ist in Fig. 1A beispielhaft als trapezförmige Profilierung 32 ausgebildet. Die Aerodynamikstruktur 10 weist beispielsweise am rechten Rand eine hintere Flügelkante 60 auf, und am linken Rand eine vordere Flügelkante 62.

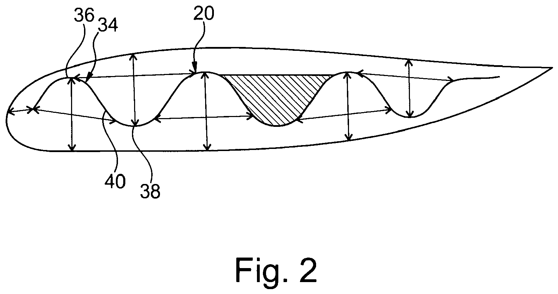

In Fig. 2 ist die periodische Profilierung 20 als wellenförmige Profilierung 34 ausgebildet. Bei der wellenförmigen Profilierung 34 bilden Bergsegmente 36 die ersten Flanschbereiche und Talsegmente 38 die zweiten Flanschbereiche. Dazwischen befindliche Bereiche 40 bilden die Stegbereiche.

Gemäß einem weiteren, nicht gezeigten Beispiel ist die Profilierung 20 als eine polygonal geformte periodische Profilierung ausgebildet.

Mit Bezug auf Fig. 1A sei darauf hingewiesen, dass die weiteren, im Zusammenhang mit Fig. 1A beschriebenen Merkmale auch für die Beispiele in Fig. 1B und 1C und insbesondere auch das Beispiel aus Fig. 2 gelten.

Die Tragstruktur 12 weist im Bereich der offenen Profilsegmente 30 mehrere in Querrichtung verlaufende Verbindungssegmente 42 auf, die zwei benachbarte erste oder zweite Flanschbereiche miteinander verbinden. Beispielsweise werden zwei benachbarte erste Flanschbereiche 22 verbunden. In einem anderen Beispiel werden zwei benachbarte zweite Flanschbereiche 24 miteinander verbunden, bzw. am vorderen Ende die unteren Kanten 44 der Profilierung.

Wenigstens ein Teil der Verbindungssegmente 42 ist als in der Länge einstellbare Verbindungssegmente 46 ausgebildet, so dass der Abstand der benachbarten ersten oder zweiten Flanschbereiche einstellbar ist. Die Längenänderung ist mit Doppelpfeilen 48 angedeutet. Die Außenhaut 14 ist an der tragenden Fläche 18 befestigt. Durch Einstellen des Abstands der benachbarten ersten oder zweiten Flanschbereiche ist eine äußere Kontur 50 der Aerodynamikstruktur 10 wenigstens in Querrichtung veränderbar.

Gemäß dem in Fig. 1A gezeigten Beispiel sind die Stegbereiche 26 und die Flanschbereiche 22, 24 in Längsrichtung miteinander verbunden, wobei die Profilierung in Querrichtung derart anpassbar ist, dass eine Weite der offenen Profilsegmente 30 mittels der einstellbaren Verbindungssegmente 46 veränderbar ist.

Gemäß einem weiteren Beispiel, das in Fig. 1A als zusätzliche Option gezeigt ist, ist wenigstens ein offenes Profilsegment als Holm 52 ausgebildet, der sich in Längsrichtung von einem Wurzelbereich zu einem äußeren Endbereich erstreckt.

Die Außenhaut ist beispielsweise verformbar und wenigstens teilweise mit Haltepunkten 54 über Halteelemente 56 an der Flächentragstruktur 16 befestigt. Beispielsweise ist die Außenhaut 14 über offene Profilsegmente hinweg mit den gegenüberliegenden Flanschbereichen 22, 24 verbunden.

In einem anderen Beispiel ist die Außenhaut 14 an den der jeweiligen Außenhaut zugewandten Flanschbereichen befestigt (nicht näher gezeigt).

Wenigstens ein Teil der Halteelemente ist in einem Beispiel als adaptive Halterungen 58 ausgebildet, was in Fig. 1A als Option mit Bezugszeichen 58 angedeutet ist. Die adaptiven Halterungen 58 dienen dazu, die Lage der Haltepunkte in Relation zu der Tragstruktur zu verändern.

Gemäß einem Beispiel sind die adaptiven Halterungen 58 in der Länge einstellbare Halteglieder, mit denen der Abstand der Haltepunkte zu der Flächentragstruktur anpassbar ist.

In einem anderen Beispiel sind die adaptiven Halterungen 58 alternativ oder zusätzlich als Schwenkarme ausgebildet (nicht näher gezeigt), die in ihrem Schwenkgrad in Relation zu der Flächentragstruktur einstellbar sind.

Gemäß einem Beispiel ist die Außenhaut einteilig ausgebildet.

In Fig. 1B ist die Aerodynamikstruktur 10 mit einer abweichenden äußeren Kontur 50 dargestellt, die dadurch erreicht wird, dass die bereits erwähnten Stellglieder derart in der Länge eingestellt sind, dass die Flächentragstruktur 16 eine andere Form aufweist. Als Option ist außerdem vorgesehen, dass eine zusätzliche Profilierung bzw. Anpassung der äußeren Kontur auch durch die in der Länge einstellbaren adaptiven Halterungen 58 möglich ist.

In Fig. 1C ist eine weitere Variante der äußeren Kontur 50 gezeigt. Ausgehend von der in Fig. 1A gezeigten äußeren Kontur 50, bei der ein nahezu symmetrisches Profil beispielhaft dargestellt ist, ist in Fig. 1B gezeigt, wie das hintere Ende 60 nach unten verschwenkt ist, und in Fig. 1C nach oben verschwenkt ist.

In Fig. 1A-1C und in Fig. 2 ist als Option gezeigt, dass der Holm in die Flächentragstruktur integriert ausgebildet ist. Beispielsweise ist die Flächentragstruktur derart in einem mittleren Bereich der Flächentragstruktur an den Holm angeschlossen, dass quer zur Längsrichtung des Holms auf beiden Seiten des Holms adaptive Bereiche der Flächentragstruktur ausgebildet sind, z.B. sind ein vorderer und ein hinterer adaptiver Bereich ausgebildet. Der Holm bildet dabei z.B. ein feststehendes Strukturbauteil.

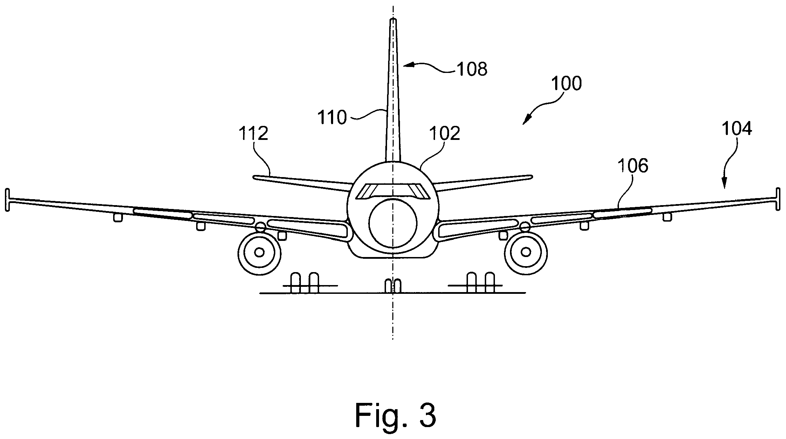

In Fig. 3 ist ein Luftfahrzeug 100 in einer Frontansicht gezeigt, das eine Rumpfkonstruktion 102 aufweist, sowie ein Tragwerk 104 mit wenigstens einer Tragfläche 106 und einem Leitwerk 108 mit wenigstens einer Leitfläche 110. Das Tragwerk 104 und das Leitwerk 108 sind an der Rumpfkonstruktion 102 gehalten. Wenigstens eine Tragfläche und/oder eine Leitfläche ist mit einer Aerodynamikstruktur 10 nach einem der vorhergehenden Beispiele ausgebildet.

Beispielsweise ist vorgesehen, dass die Tragfläche 106 ein Flügel ist, der mit einer Aerodynamikstruktur 10 nach einem der vorhergehenden Beispiele ausgebildet ist.

In einem weiteren Beispiel ist vorgesehen, dass beispielsweise ein Höhenleitwerk 112 mit einer Aerodynamikstruktur 10 nach einem der vorhergehenden Beispiele ausgebildet ist, oder ergänzend/alternativ ein Seitenleitwerk mit der Aerodynamikstruktur 10 ausgebildet ist.

Bei dem in Fig. 3 gezeigten Luftfahrzeug 100 handelt es sich beispielsweise um ein Flugzeug. Neben der gezeigten Ausführungsvariante eines üblichen Verkehrsflugzeugs für den kommerziellen Luftfahrtbereich, beispielsweise für Passagiere oder Warentransport, ist außerdem ein Luftfahrzeug (nicht näher gezeigt) vorgesehen, das aus dem Bereich der Militärflugzeuge stammt. In einem anderen Beispiel ist vorgesehen, dass Transportflugzeuge oder Kampfflugzeuge mit der Aerodynamikstruktur 10 wenigstens in einem Teil der Flügel- oder Rudereinrichtungsbereich ausgebildet sind.

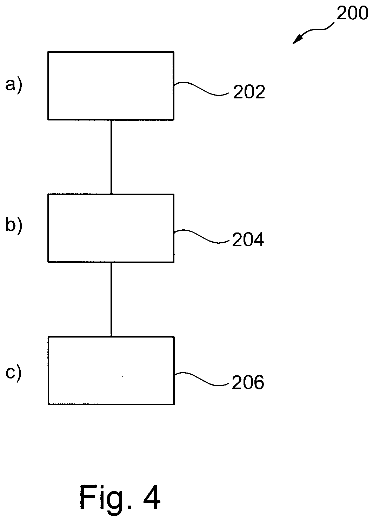

Fig. 4 zeigt ein Verfahren 200 zur Anpassung einer äußeren Kontur einer Aerodynamikstruktur für eine Flügel- oder Rudereinrichtung. Das Verfahren 200 weist die folgenden Schritte auf:
- In einem ersten Schritt 202 erfolgt eine Bereitstellung einer Aerodynamikstruktur für eine Flügel- oder Rudereinrichtung eines Luftfahrzeugs. Die Aerodynamikstruktur weist eine Tragstruktur und eine Außenhaut auf, wobei die Tragstruktur in Längsrichtung eine adaptive Flächentragstruktur aufweist, die sich in Längsrichtung von einem Wurzelbereich zu einem äußeren Endbereich erstreckt und von einer tragenden Fläche gebildet ist, die eine in Querrichtung verlaufende anpassbare periodische Profilierung aufweist, bei der abwechselnd erste und zweite Flanschbereiche ausgebildet sind, die über in Richtung einer Profilhöhe verlaufende Stegbereiche verbunden sind. Abwechselnd ausgerichtete und in Längsrichtung verlaufende offene Profilsegmente sind dabei ausgebildet. Die Tragstruktur weist im Bereich der offenen Profilsegmente mehrere in Querrichtung verlaufende Verbindungssegmente auf, die zwei benachbarte erste oder zweite Flanschbereiche miteinander verbinden. Wenigstens ein Teil der Verbindungssegmente ist als in der Länge verstellbare Verbindungssegmente ausgebildet. Die Außenhaut ist an der tragenden Fläche befestigt.
- In einem zweiten Schritt 204 erfolgt ein Einstellen der in der Länge einstellbaren Verbindungssegmente.
- In einem dritten Schritt 206 erfolgt eine Veränderung der äußeren Kontur der Aerodynamikstruktur wenigstens in Querrichtung.

Der erste Schritt 202 wird auch als Schritt a) bezeichnet, der zweite Schritt 204 als Schritt b) und der dritte Schritt 206 als Schritt c).

Die oberhalb beschriebenen Ausführungsbeispiele können in unterschiedlicher Art und Weise kombiniert werden. Insbesondere können auch Aspekte des Verfahrens für Ausführungsformen der Vorrichtungen sowie Verwendung der Vorrichtungen verwendet werden und umgekehrt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele und Aspekte beschrieben worden sind, auch in Kombination mit anderen Merkmalen oder Schritten anderer, oben beschriebener Ausführungsbeispiele und Aspekte verwendet werden können. Bezugszeichen in den Ansprüchen sind nicht als Einschränkung anzusehen.

## Patentansprüche

1. Eine Aerodynamikstruktur (10) für eine Flügel- oder Rudereinrichtung eines Luftfahrzeugs, aufweisend:
- eine Tragstruktur (12); und
- eine Außenhaut (14);
wobei die Tragstruktur in Längsrichtung eine adaptive Flächentragstruktur (16) aufweist, die sich in Längsrichtung von einem Wurzelbereich zu einem äußeren Endbereich erstreckt und von einer tragenden Fläche (18) gebildet ist, die eine in Querrichtung verlaufende anpassbare periodische Profilierung (20) aufweist, bei der abwechselnd erste (22) und zweite Flanschbereiche (24) ausgebildet sind, die über in Richtung einer Profilhöhe (28) verlaufende Stegbereiche (26) verbunden sind, wobei abwechselnd ausgerichtete und in Längsrichtung verlaufende offene Profilsegmente (30) ausgebildet sind;
wobei die Tragstruktur im Bereich der offenen Seiten der Profilsegmente mehrere in Querrichtung verlaufende Verbindungssegmente (42) aufweist, die zwei benachbarte erste oder zweite Flanschbereiche miteinander verbinden;
wobei wenigstens ein Teil der Verbindungssegmente als in der Länge einstellbare Verbindungssegmente (46) ausgebildet ist, so dass der Abstand der benachbarten ersten oder zweiten Flanschbereiche und damit die Weite offener Profilsegmente einstellbar ist; wobei die Außenhaut an der tragenden Fläche befestigt ist; und
wobei durch Einstellen des Abstands der benachbarten ersten oder zweiten Flanschbereiche und damit der Weite offener Profitsegmente eine äußere Kontur (50) der Aerodynamikstruktur wenigstens in Querrichtung veränderbar ist.

2. Aerodynamikstruktur nach Anspruch 1, wobei als in der Länge einstellbare Verbindungssegmente Stellantriebe, Stellelemente, Lenkelemente oder Aktuatoren vorgesehen sind.

3. Aerodynamikstruktur nach Anspruch 1 oder 2, wobei die periodische Profilierung ausgebildet ist als:
i) eine trapezförmige Profilierung (32); und/oder
ii) eine wellenförmige Profilierung (34).

4. Aerodynamikstruktur nach einem der vorhergehenden Ansprüche, wobei wenigstens ein offenes Profilsegment als in die Flächentragstruktur integrierter Holm (52) ausgebildet ist, der sich in Längsrichtung von einem Wurzelbereich zu einem äußeren Endbereich erstreckt.

5. Aerodynamikstruktur nach Anspruch 4, wobei die Flächentragstruktur derart in einem mittleren Bereich der Flächentragstruktur an den Holm angeschlossen ist, dass quer zur Längsrichtung des Holms auf beiden Seiten des Holms adaptive Bereich der Flächentragstruktur ausgebildet sind.

6. Aerodynamikstruktur nach einem der vorhergehenden Ansprüche, wobei die Außenhaut wenigstens teilweise mit Haltepunkten (54) über Halteelemente (56) an der Flächentragstruktur befestigt ist; und
wobei wenigstens ein Teil der Halteelemente als adaptive Halterungen (58) ausgebildet ist, mit denen die Lage der Haltepunkte in Relation zu der Flächentragstruktur veränderbar ist.

7. Aerodynamikstruktur nach Anspruch 6, wobei die adaptiven Halterungen in der Länge einstellbare Halteglieder sind, mit denen der Abstand der Haltepunkte zu der Flächentragstruktur anpassbar ist.

8. Aerodynamikstruktur nach einem der vorhergehenden Ansprüche, wobei die Außenhaut einteilig ist.

9. Luftfahrzeug (100), aufweisend:
- eine Rumpfkonstruktion (102);
- ein Tragwerk (104) mit wenigstens einer Tragfläche (106); und
- ein Leitwerk (108) mit wenigstens einer Leitfläche (110);
wobei das Tragwerk und das Leitwerk an der Rumpfkonstruktion gehalten sind; und
wobei wenigstens eine Tragfläche und/oder eine Leitfläche mit einer Aerodynamikstruktur nach einem der vorhergehenden Ansprüche ausgebildet ist.

10. Verfahren (200) zur Anpassung einer äußeren Kontur einer Aerodynamikstruktur für eine Flügel- oder Rudereinrichtung nach einem der vorhergehenden Ansprüche, aufweisend die folgenden Schritte:
- Einstellen (204) der in der Länge einstellbaren Verbindungssegmente; und
- Verändern (206) der äußeren Kontur der Aerodynamikstruktur wenigstens in Querrichtung.

11. Verwendung einer Aerodynamikstruktur nach einem der Ansprüche 1 bis 5 in einem Luftfahrzeug.

## Claims

1. An aerodynamic structure for a wing or rudder arrangement of an aircraft, comprising
- a support structure (12); and
- an outer skin (14);
wherein the support structure comprises an adaptive surface support structure (16) in the longitudinal direction, which extends in the longitudinal direction from a root area to an outer end area and is formed by a support surface (16), which exhibits an adjustable periodic profiling (20) that runs in a transverse direction, in which first (22) and second flange areas (24) are alternatingly formed, and joined together by web areas (26) running in the direction of a profile height (28), wherein alternatingly aligned open profile segments (30) running in the longitudinal direction are formed;
wherein, in the area of the sides of the open profile segments, the support structure comprises several connecting segments (42) running in the transverse direction, which join together two adjacent first or second flange areas;
wherein at least a portion of the connecting segments are designed as adjustable-length connecting segments (46), so that the distance between the adjacent first or second flange areas can be adjusted and thereby the width of the open profile segments can be adjusted;
wherein the outer skin is attached to the support surface; and
wherein an outer contour (50) of the aerodynamic structure can be changed at least in the transverse direction by adjusting the distance between the adjacent first or second flange areas and thereby the width of the open profile segments.

2. Aerodynamic structure of claim 1, wherein the adjustable length connecting elements comprise actuating drives, actuating elements, guide elements or actuators.

3. Aerodynamic structure of claim 1 or claim 2; wherein the periodic profiling is configured as:
i) a trapezoidal profiling (32); and/or
ii) a wavelike profiling (34).

4. Aerodynamic structure according to one of the preceding claims, wherein at least one open profile segment is designed as a in the surface support structure integrated spar (52), which extends in the longitudinal direction from a root area to an outer end area.

5. Aerodynamic structure of claim 4, wherein the surface support structure is connected to the spar in a central area of the surface support structure in such a way that adaptive areas of the surface support structure transverse to the longitudinal direction of the spar are formed on both sides of the spar.

6. Aerodynamic structure according to one of the preceding claims, wherein the outer skin is attached to the surface support structure at least partially with holding points (54) via retaining elements (56); and
wherein at least a portion of the retaining elements is designed as adaptive mounts (58), with which the location of the hold points in relation to the surface support structure can be varied.

7. Aerodynamic structure according to claim 6, wherein the adaptive mounts are adjustable-length hold members, with which the distance between the holding points and surface support structure can be adjusted.

8. Aerodynamic structure according to one of the preceding claims, wherein the outer skin is a single piece.

9. An aircraft (100), comprising:
- a fuselage structure (102),
- a wing assembly (104) with at least one wing surface (106); and
- a tail unit (108) with at least one control surface (110) ;
wherein the wing assembly and tail unit are held on the fuselage structure; and
wherein at least one wing surface and/or one control surface is designed with an aerodynamic structure according to one of the preceding claims.

10. A method (200) for adjusting an outer contour of an aerodynamic structure for a wing or rudder arrangement according to one of the preceding claims comprising the following steps:
- adjusting (204) the adjustable-length connecting segments;
- changing (206) the outer contour of the aerodynamic structure at least in the transverse direction.

11. Use of an aerodynamic structure according to one of the claims 1 to 5 in an aircraft.

## Revendications

1. Une structure aérodynamique pour un arrangement d'aile ou de gouvernail d'un aéronef, comprenant
- une structure de support (12); et
- une peau externe (14);
dans lequel la structure de support comprend une structure de support de surface adaptative (16) dans la direction longitudinale qui s'étend dans la direction longitudinale d'une zone de racine à une zone d'extrémité extérieure et est formée par une surface de support (16), qui expose un profilage périodique adaptable (20), qui s'étend dans une direction transversale, dans laquelle des premières (22) et secondes zones de bride (24) sont formées alternativement, et réunies par des zones d'âmes (26) s'étendant dans la direction d'une hauteur de profil (28), alternativement des segments de profil ouvert alignés (30) s'étendant dans la direction longitudinale sont formés;
dans lequel, dans la zone des côtés des segments de profil ouvert, la structure de support comprend plusieurs segments de raccordement (42) s'étendant dans la direction transversale, qui réunissent deux premières ou secondes zones de bride adjacentes;
dans lequel au moins une partie des segments de raccordement est conçue en tant que segments de raccordement à longueur réglable (46), de sorte que la distance entre les première et seconde zones de bride adjacentes peut être ajustée et ainsi la largeur des segments de profil ouverts peut être ajustée;
dans lequel la peau externe est fixée à la surface de support; et
dans lequel un contour externe (50) de la structure aérodynamique peut être changé au moins dans la direction transversale en ajustant la distance entre les premières et secondes zones de bride adjacentes et ainsi la largeur des segments de profil ouverts.

2. Structure aérodynamique selon la revendication 1, dans laquelle les éléments de raccordement à longueur réglable comprennent des entraînements d'actionnement, des éléments d'actionnement, des éléments de guidage ou des actionneurs.

3. Structure aérodynamique selon la revendication 1 ou la revendication 2; dans lequel le profilage périodique est configuré comme:
i) un profilage trapézoïdal (32); et / ou
ii) un profilage en forme de vague (34).

4. Structure aérodynamique selon l'une des revendications précédentes, dans laquelle au moins un segment de profil ouvert est conçu comme un longeron (52) intégré dans la structure de support de surface, qui s'étend dans la direction longitudinale d'une zone de racine à une zone d'extrémité extérieure.

5. Structure aérodynamique selon la revendication 4, dans laquelle la structure de support de surface est reliée au longeron dans une zone centrale de la structure de support de surface de telle sorte que des zones adaptatives de la structure de support de surface transversales à la direction longitudinale du longeron sont formées sur les deux côtés du longeron.

6. Structure aérodynamique selon l'une des revendications précédentes, dans laquelle la peau externe est fixée à la structure de support de surface au moins partiellement avec des points de maintien (54) via des éléments de retenue (56); et
dans lequel au moins une partie des éléments de retenue est conçue en tant que supports adaptatifs (58), avec lesquels l'emplacement des points de retenue par rapport à la structure de support de surface peut être modifié.

7. Structure aérodynamique selon la revendication 6, dans laquelle les supports adaptatifs sont des éléments de maintien à longueur réglable, avec lesquels la distance entre les points de maintien et la structure de support de surface peut être ajustée.

8. Structure aérodynamique selon l'une des revendications précédentes, dans laquelle la peau extérieure est monobloc.

9. Aéronef (100) comprenant:
- une structure de fuselage (102),
- un ensemble d'aile (104) avec au moins une surface d'aile (106); et
- une unité d'empennage (108) avec au moins une surface de contrôle(110);
dans lequel l'assemblage d'aile et l'empennage sont maintenus sur la structure de fuselage; et
dans lequel au moins une surface d'aile et / ou une surface de contrôle est conçue avec une structure aérodynamique selon l'une des revendications précédentes.

10. Procédé (200) de réglage d'un contour extérieur d'une structure aérodynamique pour un agencement d'aile ou de gouvernail selon l'une des revendications précédentes comprenant les étapes suivantes:
- ajuster (204) les segments de liaison à longueur réglable;
- changer (206) le contour externe de la structure aérodynamique au moins dans la direction transversale.

11. Utilisation d'une structure aérodynamique selon l'une des revendications 1 à 5 dans un aéronef.
